# EUROPEAN PATENT SPECIFICATION

(11) **EP 3 928 237 B1**
(45) Date of publication and mention of the grant of the patent: **09.12.2026**
(21) Application number: 20759630.5
(22) Date of filing: 18.02.2020
(51) Int. Cl.: G06F 21/83, G06F 3/02, G06K 7/08, G06Q 20/40, G07F 7/10, G06F 21/86

(54) **MECHANICAL KEYPAD**
MECHANISCHE TASTATUR
CLAVIER MÉCANIQUE

(30) Priority: 20.02.2019 US 201916280611
(43) Date of publication of application: 29.12.2021
(73) Proprietor: VeriFone, Inc., Wilmington DE 19808 (US)
(72) Inventor: SCHRAEDER, Travis, Fair Oaks, CA 95628 (US); YANKO, Igal, Rocklin, CA 95765 (US)
(74) Representative: DREISS Patentanwälte PartG mbB
(86) International application number: PCT/US2020/018555
(87) International publication number: WO 2020/172117

(56) References cited:
- CN-U- 205 376 363
- CN-U- 205 828 229
- US-A- 4 529 848
- US-A1- 2012 097 513
- US-A1- 2012 193 207
- US-A1- 2012 325 635
- US-A1- 2013 160 149
- US-B2- 7 323 986

## Description

### BACKGROUND OF THE INVENTION

### 1. Field of the Invention

The present disclosure relates generally to a mechanical keypad.

### 2. Description of The Related Art

US 2012/193207 A1 discloses an encryption keyboard including a front spying and detecting protection system. The encryption keyboard comprises a panel and a main control panel. A sealed flexible printed circuit board is set between the panel and the main control panel. A circuit for preventing from spying and detecting is set in the sealed flexible circuit. CN 205376363 U discloses a button subassembly of capacitance keyboard. US 2012/0097513 A1 discloses a dust-proof keyboard, which includes a keyboard main body and a plurality of keyboard keys buckled on the keyboard main body. Mechanical keypads are commonly found on point of sale devices, ATMs, etc. and are sometimes the only point of interaction that a person has with such devices. These mechanical keypads may also be a target of tampering. For example, an attacker may attempt to access a secure area of a keypad by removing one of the keys. Such access may lead to the compromise of secure information.

### SUMMARY OF THE INVENTION

Mechanical keypads are disclosed. The invention is as defined in claim 1.

In one embodiment, the mechanical keypad may include a spring between the structural element and the key cap, such that when the key cap is depressed, the spring compresses, causing the key securing device to travel a shorter distance than a distance travelled by the key cap.

In one embodiment, the key securing device may be configured to be damaged when the key post is removed from the recess or opening.

In one embodiment, the post may be mechanically secured in the key securing device.

In one embodiment, the mechanical keypad may include a plurality of posts.

In one embodiment, the mechanical keypad may include a web between the key cap and the structural element that prevents ingress of debris and foreign matter into the structural element.

In one embodiment, the mechanical keypad may include a key switch for interacting with the key switch interface, wherein depressing the key cap causes the key switch interface to actuate the key switch.

In one embodiment, the key securing device may be mechanically unstable with respect to the key switch when the post is not received in the recess or opening therein.

In one embodiment, a lower surface of the key securing device may have a convex portion.

In one embodiment, the key switch interface may protrude from a lower surface of the key securing device.

In one embodiment, the key securing device may be configured to be damaged when the key post is removed.

In one embodiment, the post receiving structure may include a recess.

In one embodiment, the post receiving structure may include an opening.

In one embodiment, the key switch may be centered between the plurality of posts.

In one embodiment, the mechanical keypad may be positioned in a housing, and may include an alarm switch having a security element associated therewith, the security element positioned between the housing and the alarm switch such that when the housing and the alarm switch are separated, the alarm switch is activated.

In one embodiment, a bottom surface of the key securing device may have a convex portion.

In one embodiment, the key switch interface may protrude from the key securing device.

In one embodiment, the structural element may include a recess formed on a lower surface thereof, wherein the recess is provided for the key securing device.

In one embodiment, the mechanical keypad may include a spring between the structural element and the key cap such that when the key cap is depressed, the spring compresses before the key securing device moves.

### BRIEF DESCRIPTION OF THE DRAWINGS

For a more complete understanding of the present invention, the objects and advantages thereof, reference is now made to the following descriptions taken in connection with the accompanying drawings in which:
Figure 1 depicts a mechanical keypad according to one embodiment;
Figure 2 depicts a section view of a mechanical keypad according to one embodiment;
Figure 3 depicts a sectional view of a key securing device along its length according to one embodiment; and
Figures 4A and 4B depict an embodiment in which a key cap is depressed on a lateral edge thereof.

### DETAILED DESCRIPTION OF PREFERRED EMBODIMENTS

Embodiments are directed to mechanical keypads. Embodiments may use a key securing device, such as a key security clip, to secure one or more posts of a key cap through a structural component, such as a light guide. The key cap does not directly actuate a key switch (e.g., a key metal dome switch); instead, the key switch is actuated by the key securing device.

In embodiments, the key securing device may include a raised feature, such as a key switch interface, to interact with the key switch. If the key securing device is not in place, is not aligned correctly, is damaged, etc. the key cap may not properly actuate the key switch.

Embodiments may provide additional security features. For example, in embodiments, the key securing device may function to prevent unwanted key cap removal, such as by vandalism, security attacks, etc. In one embodiment, if the key cap is removed, it is difficult or impossible to reattach the key securing device to the post of the key cap without gaining access to a secure interior of the device. Such access to the secure interior may activate a security device (e.g., an alarm switch, a case open switch, etc.), thereby detecting the attack.

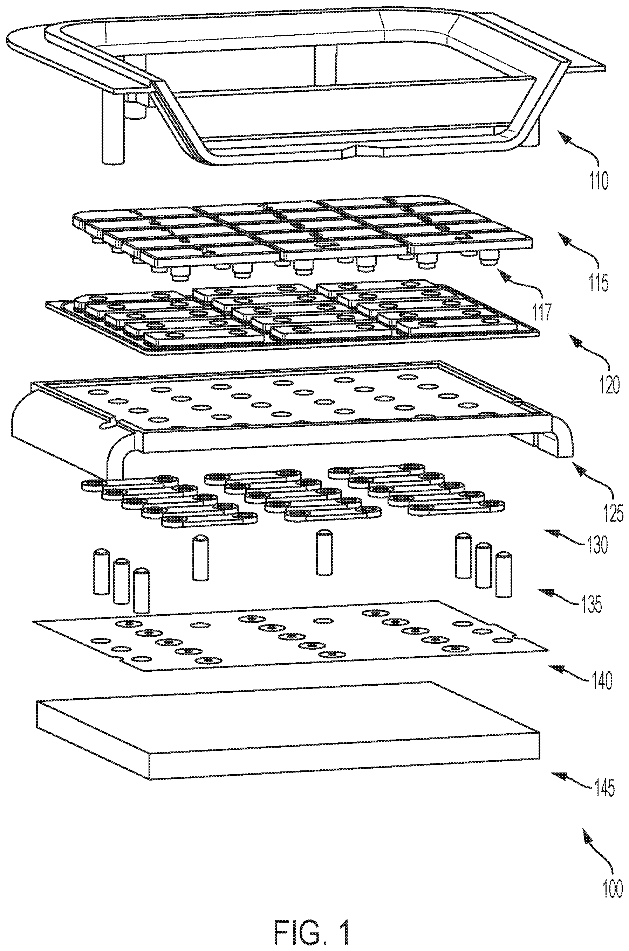

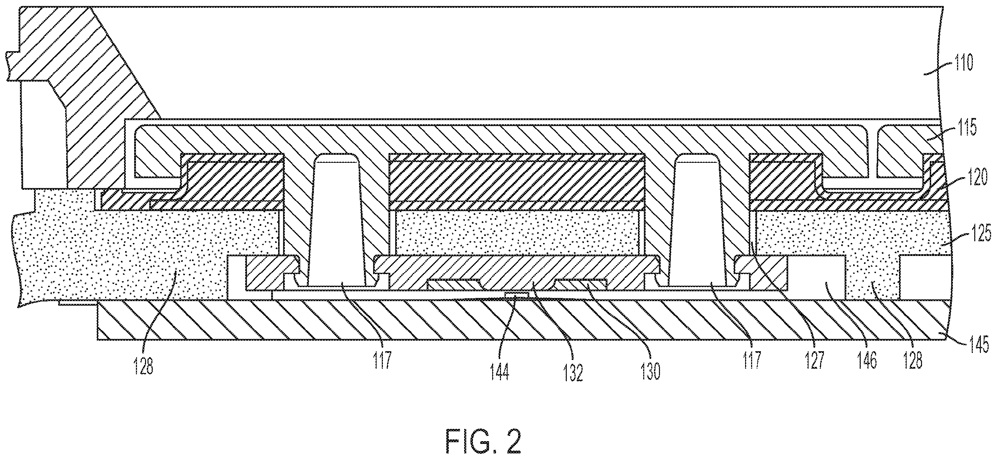

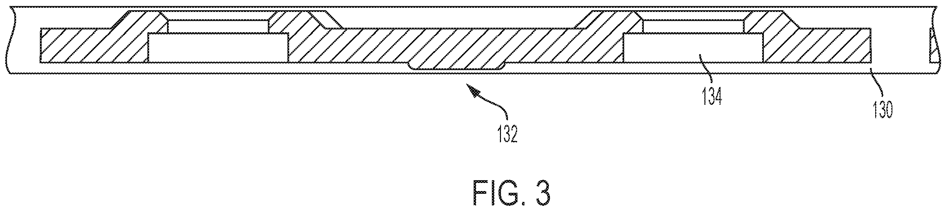

Referring to Figures 1-3, a mechanical keypad is disclosed according to embodiments. Figure 1 depicts an exploded view of a mechanical keypad according to one embodiment. Figure 2 depicts a sectional view of the mechanical keyboard. Figure 3 depicts a section view of key securing device 130 along its length.

Embodiments of mechanical keypad 100 may include top case 110, key caps 115, web 120, structural element 125, key securing devices 130, security elements 135 such as a case open switch or parts thereof, key switch layer 140, and frame 145.

In one embodiment, top case 110 may be part of a housing in which the keypad is provided. Examples of housings include ATM housings, point of sale device housing, keypad lock housings, or any other suitable housing in which security of the key switches and/or electronics provided under the keypad is desired.

In one embodiment, key caps 115 may be provided in a mat of key caps, as individual key caps, etc.

In one embodiment, each key cap 115 may have one or more posts 117 provided on the underside thereof. Posts 117 may be provided on the underside of key cap 115 in any suitable manner, and at any suitable location. For example, if one post 117 is provided, it may be provided in the center of key cap 115, or it may be offset from the center. If multiple posts 117 are used, they may be placed symmetrically, asymmetrically, etc. For example, if two posts 117 are provided, then the two posts 117 may be placed equidistant from the center of the key cap 115 and along a line that bisects the key cap 115. Other arrangements of multiple posts 117 may also be used.

In one embodiment, posts 117 may be formed as part of key cap 115.

Web 120 may be provided and shaped to prevent ingress of debris and foreign matter, such as dirt, water, etc. into structural element 125. In one embodiment, web 120 may be made of a flexible material, such as silicone, silicone rubber, etc.

In one embodiment, each key cap 115 may be joined to web 120 using, for example, adhesives.

In one embodiment, web 120 may provide a bias to return key caps 115 to an upward position. Web 120 may also hold key caps 115 in their intended positions. Web 120 may further prevent or reduce light leakage if opaque or masked with an opaque layer.

Structural element 125 may provide a structural base for key caps 115. In one embodiment, posts 117 from key caps 115 may pass through passages, holes, openings, or apertures 127 in structural element 125 and may move with little, if any, resistance from structural element 125. For example, posts 117 may slide in passages, holes, openings, or apertures 127 formed in structural element 125.

In one embodiment, structural element 125 may be a light guide that may be used to provide back lighting for key caps 115. Structural element 125 may provide any additional functions as is necessary and/or desired.

Key securing devices 130 may be provided on the opposite side of structural element 125 and may include one or more post receiving structure 134, such as openings or recesses, each to receive one of posts 117. Each key cap 115 may be provided with a corresponding key securing device 130.

In one embodiment, a top portion of key securing device 130 may be in contact with a lower surface of structural element when key cap 115 is not actuated or depressed.

Key securing devices 130 may securely engage posts 117 such that key cap 115 and corresponding key securing device 130 move in unison when engaged. For example, posts 117 may engage opening or recesses 134 formed in key securing devices 130 in a clickable manner. For example, during assembly, posts 117 may be pushed into openings or recesses 134 of key securing devices 130 and may remain connected by a mechanical force, such as friction, or a one-way flexible collar, or flange, that may engage with a notched portion of post 117, so that key cap 115 and key securing device 130 move in unison, or substantially in unison, when connected. In another embodiment, posts 117 may be secured in key securing devices 130 using adhesive, heat staking, welding, fastener clip, pin clips, etc. Other manners of connection may be used as is necessary and/or desired.

In another embodiment, key securing devices 130 may engage posts 117 such that key cap 115 and corresponding key securing device 130 may move in unison, but travel different distances. For example, a spring (not shown) may be provided between posts 117 and key securing device 130. In this arrangement, while key cap 115 and key securing device 130 move substantially in unison, key cap 115 may travel a greater distance than key securing device 130 moves because the spring will compress causing key securing device 130 to move a shorter distance than the distance travelled by key cap 115.

In one embodiment, if any of key caps 115 is unwantedly removed, one or more of posts 117 are removed from key securing device 130, which may cause key securing device 130 to be damaged to the point where post 117 cannot be re-inserted securely to allow proper operation of the keypad. For example, key securing device 130 may include break points (not shown) such that when sufficient force is applied in an attempt to pry key cap 115 off, key securing device 130 is damaged, breaks, etc. such that posts 117 cannot reengage with key securing device 130 properly. In another embodiment, the securing mechanism in recess or opening 134 may be damaged such that key cap 115 and key securing device 130 would not be able to be properly reengaged. For example, post 117 and opening 134 may not be able to engage with each other or key cap 115 and key securing device 130 would not move in unison if post 117 were re-inserted into recess or opening 134.

Key securing device 130 may have a tab or other structure (not shown) that engages with post 117 upon assembly and secure post 117 to key securing device 130. Upon forced disengagement, the tab or other structure may break off, or otherwise be damaged, such that when reengagement of post 117 to key securing device 130 is attempted, the two cannot be securely reengaged. In another embodiment, post 117 may include a securing mechanism (not shown) to secure it to the key securing structure 130 that may be damaged if the key cap is forcefully removed. For example, post 117 may have a flexible tab (not shown) that allows it to be inserted into and secured to key securing structure 130, or a pin or open clip fastener (not shown) that may be affixed to the post during assembly to secure it in place with respect to the key security structure. When forcefully removed, the tab, pin, open clip fastener or similar mechanism will be damaged or cause damage to post 117, key securing structure 130, or both such that they cannot be properly and securely reengaged.

In one embodiment, key securing device 130 may be a single-use device.

Key securing device 130 may further include key switch interface 132 on its lower surface. Key switch interface 132 may correspond to, and interface with, key switch 144.

One or more alarm switch (not shown) may be provided on or with key switch layer 140, frame 145, on printed circuit board (not shown), etc. For example, the alarm switch may take the form of a case open switch. For example, each alarm switch may interact with a security element 135 that may be positioned between top case 110 and the alarm switch. In another embodiment, security element may be positioned between structural element 125 and alarm switch. Thus, when top case 110 and/or structural element 125 is removed, lifted, or separated from key switch layer 140, frame 145, and/or the printed circuit board or its position is otherwise altered, the alarm switch may recognize this alternation and may trigger an alarm.

For example, in one embodiment, security element 135 may be a security plunger that in its unaltered state has a downward force applied to it that causes the plunger to similarly engage with the alarm switch. If the frame of the device were to be opened or otherwise tampered, the downward force may be changed, reduced, or eliminated, which may cause the security plunger to disengage with the alarm switch and trigger an alarm.

In one embodiment, security elements 135 may extend through key switch layer 140 into frame 145 to interact with the printed circuit board (not shown) that may be inside or below frame 145. In one embodiment security element 135 may be an integral part of the top case 110, structural element 125, or web 120.

In one embodiment, recesses (not shown) may be provided in structural element 125 for receiving an end of security elements 135. In another embodiment, through-holes may be provided in structural element 125 to allow security elements 135 to pass through structural element 125.

Key switch layer 140 may include one or more key switches 144. Each key switch 144 may be associated with a key cap 115. Key switches 144 may be formed as domes on key switch layer 140.

Key switches 144 may be offset from posts 117 and passages, holes, openings, or apertures 127 such that key switch 144 may not be directly accessible through passages, holes, openings, or apertures 127 if key cap 115 were removed. For example, key switch 144 may be positioned between recess or opening 134 in key securing device 130.

In one embodiment, key switch layer 140 may be metal.

In one embodiment, key switch layer 140 may be part of a printed circuit board.

In one embodiment, each key switch 144 may be formed as a plurality of layers. For example, a first layer may include convex domes, and a second layer may include switch circuitry. The first layer may be adhered to, laid on top of, etc. the switch circuitry, such that when the first layer is depressed, contacted, etc., the switch circuitry is actuated.

Other designs and mechanisms for key switch 144, such as mechanical switches, carbon pill switches, etc. may be used as is necessary and/or desired.

In another embodiment, key switches 144 may protrude from the plane of key switch layer. For example, key switches 144 may be comprised of a metal dome that, when depressed, causes the key press to register.

In one embodiment, key securing device 130 may have a lower surface shape that is mechanically unstable with regard to key switch layer 140 and/or key switches 144. For example, key securing device 130 may have a convex lower surface, and key switch layer 140 may include key switch 144 that has a dome shaped structure made of metal or other suitable substance, such that when key securing device 130 is properly engaged, the lower surface of key securing device 130 (e.g. key switch interface 132) compresses the dome to register a key press. If, however, key cap 115 is disengaged from key securing device 130, because the lower surface of key securing device 130 does not lie flat against key switch layer 140 and/or the dome of key switch 144, key securing device 130 will not be in alignment with key switch 144. Thus, key switch 144 will not register a key press when key cap 115 is depressed.

In one embodiment, the mechanical instability that results from the shape of the lower surface of key securing device 130 and/or key switch 144 does not allow key securing device 130 to easily rest in proper alignment with the key switch assembly. Thus, it is difficult to re-insert posts 117 of key cap 115 into key securing device 130 when key cap 115 has been removed or detached from key securing device 130.

In another embodiment, the lower surface of key securing device 130 may include a ridge or any other suitable shape that increases the mechanical instability of security device and key switch layer 140, therefore making it difficult to align key cap 115 with key securing device 130 so depressing key cap 115 actuates key switch 144.

In one embodiment, structural element 125 may be configured to include one or more of recesses 146 on a lower surface thereof. In one embodiment, a single recess 146 may be provided in which all key switches 144 are positioned. Thus, in this embodiment, there is no mechanism for containing a detached key securing device 130 near its associated key switch 144.

In another embodiment, a plurality of key switches 144 may be positioned within each recess 146. For example, a recess may be provided vertically or horizontally for all key switches 144 in a row or column. Thus, in this embodiment, a detached key securing device 130 will be retained in the recess for its column or row, but it will still be difficult to align and reattach key securing devices 130 to a corresponding post 117.

In another embodiment, recesses 146 may be provided for each key switch 144. Thus, in this embodiment, a detached key securing device 130 may be retained in the recess for its key switch. Recesses 146 may be formed to be larger than key securing devices 130 to allow for movement of any key securing device 130 that is removed, disengaged, or detached from a corresponding post 117 of key cap 130, allowing for the benefit of difficult alignment and reattachment of key securing device 130 to the corresponding post 117 of key cap 115.

In one embodiment, recesses 146 may be formed by ribs 128 formed in structural element 125. The number and orientation of ribs 128 may vary as is necessary and/or desired.

Frame 145 may provide a base for the keypad and may house internal components, such as processors, memory, etc.

Referring to Figure 3, a section view of key securing device 130 along its length is provided. Key securing device 130 may include key switch interface 132 on its lower surface. Key switch interface 132 may be convex such that it promotes mechanical instability with key switch layer 140. In one embodiment, when posts 117 are secured in key securing device 130, key switch interface 132 may be in alignment with one of key switches 144.

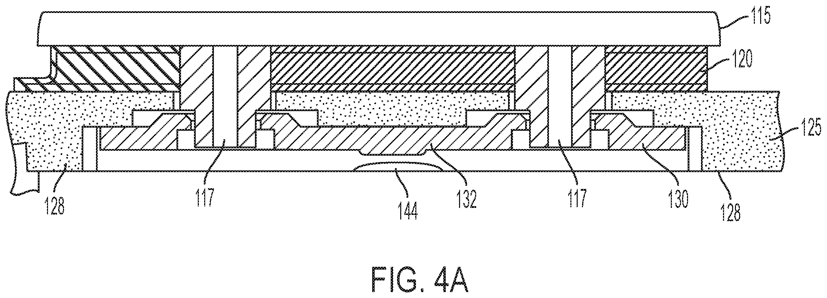

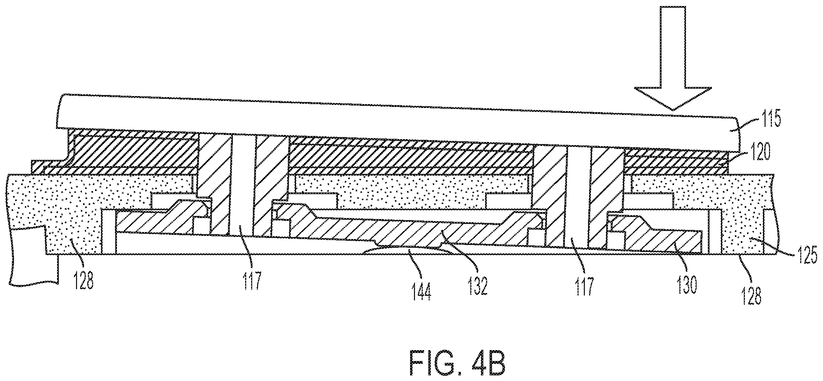

Referring to Figures 4A and 4B, key cap 115 may have a shape such that key cap 115 may be depressed on lateral end of key cap 115 between post 117 and an edge of key cap 115. For example, in one embodiment, key cap 115 may interface with key securing device 130 such that when key cap 115 is pressed on a lateral end thereof, the interaction of posts 117 and structural element 125 forces key cap 115 and key securing device 130 to move in a downward direction, therefore providing an acceptable feel to the user. Key securing device 130 creates a pivot point at the side opposite the end which is pressed, which results in a lever action that helps to engage key switch 144, even though the key cap 115 was pressed off-center.

It will be appreciated by persons skilled in the art that the present invention is not limited by what has been particularly shown and described hereinabove. Rather the scope of the present invention includes both combinations and sub-combinations of features described hereinabove and variations and modifications thereof which are not in the prior art. It should further be recognized that these embodiments are not exclusive to each other.

It will be readily understood by those persons skilled in the art that the embodiments disclosed here are susceptible to broad utility and application. Many embodiments and adaptations of the present invention other than those herein described, as well as many variations, modifications and equivalent arrangements, will be apparent from or reasonably suggested by the present invention and foregoing description thereof, without departing from the scope of the invention.

Accordingly, while the present invention has been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A mechanical keypad comprising:
a key cap (115) comprising a post (117) extending from a bottom surface thereof;
a structural element (125) comprising a passage (127) configured to receive the post (117) therethrough; and
a key securing device (130) that securely engages, through the passage (127), the post (117) in a recess or opening (134) formed therein, and comprising a key switch interface (132) on a lower surface thereof;
wherein the key cap (115) and the key securing device (130) move substantially in unison when the key post (117) is securely engaged in the key securing device (130), and wherein the key securing device (130) is damaged and cannot reengage with the key post (117) when the key post (117) is removed from the recess or opening (134).

2. The mechanical keypad of claim 1, further comprising a spring between the structural element (125) and the key cap (115), such that when the key cap (115) is depressed, the spring compresses, causing the key securing device (130) to travel a shorter distance than a distance travelled by the key cap (115).

3. The mechanical keypad of claim 1 or 2, wherein the post (117) is mechanically secured in the key securing device (130).

4. The mechanical keypad of any one of the preceding claims, further comprising a plurality of posts (117).

5. The mechanical keypad of any one of the preceding claims, further comprising:
a web (120) between the key cap (115) and the structural element (125) that prevents ingress of debris and foreign matter into the structural element (125).

6. The mechanical keypad of any one of the preceding claims, further
comprising: a key switch (144) for interacting with the key switch interface (132);
wherein depressing the key cap (115) causes the key switch interface (132) to actuate the key switch (144).

7. The mechanical keypad of any one of the preceding claims, wherein the key securing device (130) is mechanically unstable with respect to the key switch (144) when the post (117) is not received in the recess or opening (134) therein.

8. The mechanical keypad of any one of the preceding claims, wherein the lower surface of the key securing device (130) comprises a convex portion.

9. The mechanical keypad of any one of the preceding claims,
wherein the key switch interface (132) protrudes from the lower surface of the key securingdevice (130).

10. The mechanical keypad of any one of the preceding claims, wherein the key cap (115) comprises
a plurality of posts (117) extending from the bottom surface,
the structural element (125) comprises a plurality of passages (127),
the key securing device (130) securely receives the plurality of posts (117) in a post-receiving structure formed therein, the keypad further comprising
a key switch layer (140) comprising a key switch (144) that interacts with the key switch interface (132) and registers a key press, and
wherein depressing the key cap (115) causes the key switch interface (132) that securely receives the key posts (117) for the key caps (115) to actuate the key switch (144).

11. The mechanical keypad of claim 10, wherein the key switch (144) is centered between the plurality of posts (117).

12. The mechanical keypad of claim 10 or 11, wherein the mechanical keypad is positioned in a housing, and further comprising an alarm switch comprising a security element associated therewith, the security element positioned between the housing and the alarm switch such that when the housing and the alarm switch are separated, the alarm switch isactivated.

13. The mechanical keypad of any one of claims 10 to 12, wherein the key switch interface (132) protrudes from the key securing device (130).

14. The mechanical keypad of any one of claims 10 to 13, wherein the structural element (125) comprises a recess formed on a lower surface thereof, wherein the recess is provided for the key securing device (130).

15. The mechanical keypad of any one of claim 10 to 14, further comprising a spring between the structural element (125) and the key cap (115) such that when the key cap (115) is depressed, the spring compresses before the key securing device (130)moves.

## Patentansprüche

1. Mechanisches Tastenfeld, umfassend:
eine Tastenkappe (115), umfassend einen Stift (117), der sich von einer Bodenoberfläche davon erstreckt;
ein Strukturelement (125), umfassend einen Durchgang (127), der konfiguriert ist, um den Stift (117) dahindurch aufzunehmen; und
eine Tastensicherungsvorrichtung (130), die durch den Durchgang (127) den Stift (117) in einer Aussparung oder einer Öffnung (134), die darin ausgebildet ist, sicher in Eingriff nimmt und umfassend eine Tastenschalterschnittstelle (132) an einer unteren Oberfläche davon;
wobei sich die Tastenkappe (115) und die Tastensicherungsvorrichtung (130) im Wesentlichen gemeinsam bewegen, wenn der Tastenstift (117) in der Tastensicherungsvorrichtung (130) sicher in Eingriff steht, und wobei die Tastensicherungsvorrichtung (130) beschädigt ist und nicht wieder mit dem Tastenstift (117) in Eingriff kommen kann, wenn der Tastenstift (117) aus der Aussparung oder der Öffnung (134) entfernt wird.

2. Mechanisches Tastenfeld nach Anspruch 1, ferner umfassend eine Feder zwischen dem Strukturelement (125) und der Tastenkappe (115), derart, dass, wenn die Tastenkappe (115) niedergedrückt wird, die Feder komprimiert wird, wodurch bewirkt wird, dass die Tastensicherungsvorrichtung (130) eine kürzere Strecke als eine Strecke, die durch die Tastenkappe (115) zurückgelegt wird, zurücklegt.

3. Mechanisches Tastenfeld nach Anspruch 1 oder 2, wobei der Stift (117) in der Tastensicherungsvorrichtung (130) mechanisch gesichert ist.

4. Mechanisches Tastenfeld nach einem der vorstehenden Ansprüche, ferner umfassend eine Vielzahl von Stiften (117).

5. Mechanisches Tastenfeld nach einem der vorstehenden Ansprüche, ferner umfassend:
einen Steg (120) zwischen der Tastenkappe (115) und dem Strukturelement (125), der ein Eindringen von Schmutz und Fremdstoff in das Strukturelement (125) verhindert.

6. Mechanisches Tastenfeld nach einem der vorstehenden Ansprüche, ferner umfassend: einen Tastenschalter (144) zum Zusammenwirken mit der Tastenschalterschnittstelle (132);
wobei das Niederdrücken der Tastenkappe (115) bewirkt, dass die Tastenschalterschnittstelle (132) den Tastenschalter (144) betätigt.

7. Mechanisches Tastenfeld nach einem der vorstehenden Ansprüche, wobei die Tastensicherungsvorrichtung (130) in Bezug auf den Tastenschalter (144) mechanisch instabil ist, wenn der Stift (117) nicht in der Aussparung oder der Öffnung (134) darin aufgenommen ist.

8. Mechanisches Tastenfeld nach einem der vorstehenden Ansprüche, wobei die untere Oberfläche der Tastensicherungsvorrichtung (130) einen konvexen Abschnitt umfasst.

9. Mechanisches Tastenfeld nach einem der vorstehenden Ansprüche, wobei die Tastenschalterschnittstelle (132) von der unteren Oberfläche der Tastensicherungsvorrichtung (130) vorsteht.

10. Mechanisches Tastenfeld nach einem der vorstehenden Ansprüche, wobei die Tastenkappe (115) umfasst
eine Vielzahl von Stiften (117), die sich von der Bodenoberfläche erstrecken,
wobei das Strukturelement (125) eine Vielzahl von Durchgängen (127) umfasst,
wobei die Tastensicherungsvorrichtung (130) die Vielzahl von Stiften (117) in einer Stiftaufnahmestruktur, die darin ausgebildet ist, sicher aufnimmt, das Tastenfeld ferner umfassend eine Tastenschalterschicht (140), umfassend einen Tastenschalter (144), der mit der Tastenschalterschnittstelle (132) zusammenwirkt und einen Tastendruck registriert, und
wobei das Niederdrücken der Tastenkappe (115) bewirkt, dass die Tastenschalterschnittstelle (132), die die Tastenstifte (117) für die Tastenkappen (115) sicher aufnimmt, den Tastenschalter (144) betätigt.

11. Mechanisches Tastenfeld nach Anspruch 10, wobei der Tastenschalter (144) zwischen der Vielzahl von Stiften (117) zentriert ist.

12. Mechanisches Tastenfeld nach Anspruch 10 oder 11, wobei das mechanische Tastenfeld in einem Gehäuse positioniert ist, und ferner umfassend einen Alarmschalter, umfassend ein Sicherheitselement, das damit verknüpft ist, wobei das Sicherheitselement zwischen dem Gehäuse und dem Alarmschalter derart positioniert ist, dass, wenn das Gehäuse und der Alarmschalter getrennt werden, der Alarmschalter aktiviert wird.

13. Mechanisches Tastenfeld nach einem der Ansprüche 10 bis 12, wobei die Tastenschalterschnittstelle (132) von der Tastensicherungsvorrichtung (130) vorsteht.

14. Mechanisches Tastenfeld nach einem der Ansprüche 10 bis 13, wobei das Strukturelement (125) eine Aussparung umfasst, die an einer unteren Oberfläche davon ausgebildet ist, wobei die Aussparung für die Tastensicherungsvorrichtung (130) bereitgestellt ist.

15. Mechanisches Tastenfeld nach einem der Ansprüche 10 bis 14, ferner umfassend eine Feder zwischen dem Strukturelement (125) und der Tastenkappe (115), derart, dass, wenn die Tastenkappe (115) niedergedrückt wird, die Feder komprimiert wird, bevor sich die Tastensicherungsvorrichtung (130) bewegt.

## Revendications

1. Clavier mécanique comprenant:
un capuchon de touche (115) comprenant un montant (117) s'étendant à partir d'une surface inférieure de celui-ci;
un élément structurel (125) comprenant un passage (127) conçu pour recevoir le montant (117) à travers celui-ci; et
un dispositif de fixation de touche (130) qui met en prise de manière sûre, à travers le passage (127), le montant (117) dans une cavité ou ouverture (134) formée dans celui-ci, et comprenant une interface de commutateur de touche (132) sur une surface inférieure de celle-ci;
dans lequel le capuchon de touche (115) et le dispositif de fixation de touche (130) se déplacent sensiblement à l'unisson lorsque le montant de touche (117) est solidement mis en prise dans le dispositif de fixation de touche (130), et dans lequel le dispositif de fixation de touche (130) est endommagé et ne peut pas revenir en prise avec le montant de touche (117) lorsque le montant de touche (117) est retiré de l'évidement ou de l'ouverture (134).

2. Clavier mécanique selon la revendication 1, comprenant en outre un ressort entre l'élément structurel (125) et le capuchon de touche (115), de telle sorte que lorsque le capuchon de touche (115) est enfoncé, le ressort se comprime, amenant le dispositif de fixation de touche (130) à parcourir une distance plus courte qu'une distance parcourue par le capuchon de touche (115).

3. Clavier mécanique selon la revendication 1 ou 2, dans lequel le montant (117) est fixé mécaniquement dans le dispositif de fixation de touche (130).

4. Clavier mécanique selon l'une quelconque des revendications précédentes, comprenant en outre une pluralité de montants (117).

5. Clavier mécanique selon l'une quelconque des revendications précédentes, comprenant en outre:
une âme (120) entre le capuchon de touche (115) et l'élément structurel (125) qui empêche la pénétration de débris et de corps étrangers dans l'élément structurel (125).

6. Clavier mécanique selon l'une quelconque des revendications précédentes, comprenant en outre: un commutateur de touche (144) pour interagir avec l'interface de commutateur de touche (132);
dans lequel l'enfoncement du capuchon de touche (115) amène l'interface de commutateur de touche (132) à actionner le commutateur de touche (144).

7. Clavier mécanique selon l'une quelconque des revendications précédentes, dans lequel le dispositif de fixation de touche (130) est mécaniquement instable par rapport au commutateur de touche (144) lorsque le montant (117) n'est pas reçu dans l'évidement ou l'ouverture (134).

8. Clavier mécanique selon l'une quelconque des revendications précédentes, dans lequel la surface inférieure du dispositif de fixation de touche (130) comprend une partie convexe.

9. Clavier mécanique selon l'une quelconque des revendications précédentes, dans lequel l'interface de commutateur de touche (132) fait saillie depuis la surface inférieure du dispositif de fixation de touche (130).

10. Clavier mécanique selon l'une quelconque des revendications précédentes, dans lequel le capuchon de touche (115) comprend
une pluralité de montants (117) s'étendant depuis la surface inférieure,
l'élément structurel (125) comprend une pluralité de passages (127),
le dispositif de fixation de touche (130) reçoit de manière sûre la pluralité de montants (117) dans une structure de réception de montant formée à l'intérieur, le clavier comprenant en outre
une couche de commutation de touche (140) comprenant un commutateur de touche (144) qui interagit avec l'interface de commutation de touche (132) et enregistre une pression de touche, et
dans lequel l'enfoncement du capuchon de touche (115) amène l'interface de commutateur de touche (132) qui reçoit de manière sûre les montants de touche (117) pour les capuchons de touche (115) à actionner le commutateur de touche (144).

11. Clavier mécanique selon la revendication 10, dans lequel le commutateur de touche (144) est centré entre la pluralité de montants (117).

12. Clavier mécanique selon la revendication 10 ou 11, dans lequel le clavier mécanique est positionné dans un boîtier, et comprenant en outre un commutateur d'alarme comprenant un élément de sécurité associé à celui-ci, l'élément de sécurité étant positionné entre le boîtier et le commutateur d'alarme de telle sorte que lorsque le boîtier et le commutateur d'alarme sont séparés, le commutateur d'alarme est activé.

13. Clavier mécanique selon l'une quelconque des revendications 10 à 12, dans lequel l'interface de commutation de touche (132) fait saillie à partir du dispositif de fixation de touche (130).

14. Clavier mécanique selon l'une quelconque des revendications 10 à 13, dans lequel l'élément structurel (125) comprend un évidement formé sur sa surface inférieure, dans lequel l'évidement est prévu pour le dispositif de fixation de touche (130).

15. Clavier mécanique selon l'une quelconque des revendications 10 à 14, comprenant en outre un ressort entre l'élément structurel (125) et le capuchon de touche (115), de telle sorte que, lorsque le capuchon de touche (115) est enfoncé, le ressort se comprime avant que le dispositif de fixation de touche (130) ne se déplace.
